# EUROPEAN PATENT APPLICATION

(11) **EP 1 133 925 A1**
(43) Date of publication of application: **19.09.2001**
(21) Application number: 01106272.6
(22) Date of filing: 14.03.2001
(51) Int. Cl.: A23G 9/02, A23G 9/04

(54) **Container for ice-cream**

(30) Priority: 15.03.2000 IT BO000142
(71) Applicant: Trani, Giovanni, 31013 Codogne' (IT); Grazio, Adriano, 36070 Castelgomberto (IT)
(72) Inventor: Trani, Giovanni, 31013 Codogne' (IT); Grazio, Adriano, 36070 Castelgomberto (IT)
(74) Representative: Cerbaro, Elena, Dr.

(57) **Abstract**

A container (1) for ice-cream and similar, having a tub (2) with an opening (3) at the top, and characterized by having a decorative border (5) extending along the peripheral edge of the opening (3) and in turn having an annular collar (8) insertable in easily removable manner inside the opening (3) of the tub (2), and a number of decorative elements (8, 9, 12) equally spaced along the whole of the annular collar (8).

## Description

The present invention relates to a container for ice-cream and similar.

As is known, in the sale of loose ice-cream and similar, it is common practice to display the various types of ice-cream inside metal tublike containers in a refrigerated display window to encourage purchase and simplify selection by the consumer.

Extensive market research confirms a considerable increase in the sale of loose ice-cream when the refrigerated display window containers are edged with various types of decoration (e.g. biscuits of various shapes and sizes) to make the ice-cream more tempting.

Unfortunately, since decorating the containers is a long, painstaking job which can only be done manually, and which increases production cost over and above the increase in sales, display containers are normally only decorated on special occasions, such as fairs, opening ceremonies or conventions.

It is an object of the present invention to provide a container for ice-cream and similar, designed to eliminate the aforementioned drawbacks.

According to the present invention, there is provided a container for ice-cream and similar, comprising a tub having an opening at the top, and characterized by comprising a decorative border extending along the peripheral edge of the opening.

According to the present invention, there is also provided a decorative border for tubs for ice-cream and similar, characterized by comprising an annular collar insertable in easily removable manner inside the opening of said tub for ice-cream and similar; and a number of decorative elements arranged along the whole of said annular collar.

A non-limiting embodiment of the invention will be described by way of example with reference to the accompanying drawings, in which:
Figure 1 shows a view in perspective of a container for ice-cream and similar, in accordance with the teachings of the present invention;
Figure 2 shows a larger-scale detail of the Figure 1 container;
Figure 3 shows a larger-scale view in perspective of a variation of the Figure 2 detail;
Figure 4 shows a variation of the Figure 2 detail.

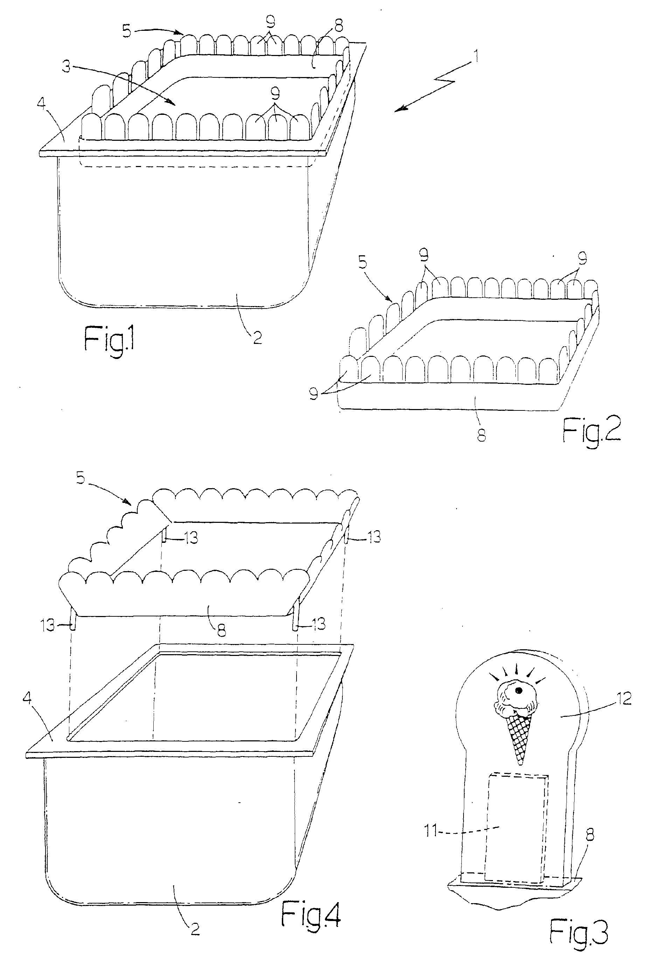

Number 1 in Figure 1 indicates as a whole a container for ice-cream and similar, and particularly suitable for display in a known refrigerated display window.

Container 1 comprises a product tub 2 with a top opening 3 of given shape and about which extends a peripheral flange 4 for supporting tub 2 inside the refrigerated display window; and a removable decorative border 5 extending along the peripheral edge of opening 3.

In the example shown, tub 2 is substantially parallelepiped-shaped with a substantially rectangular opening 3 and peripheral flange 4, and is preferably, though not necessarily, made of metal pressed in known manner.

Decorative border 5, on the other hand, may be made indifferently of steel, aluminium, plastic, ceramic, plastic-coated cardboard or similar, and comprises an annular collar 8 which is inserted in easily removable manner inside opening 3 of tub 2, and a number of decorative appendixes 9 which, in the example shown, are equally spaced along the whole of annular collar 8.

More specifically, annular collar 8 is the same shape as opening 3, i.e. substantially rectangular, and decorative appendixes 9 project from annular collar 8, through opening 3 and outwards of tub 2, and may be indifferently in the form of petals, flowers, leaves, biscuits, fruit, dolls, wafers, etc. In addition or alternatively, decorative appendixes 9 may be coloured to represent fruit, flowers, biscuits, wafers, landscapes, dolls, various allegorical figures, and/or writing of any sort.

It should be pointed out that annular collar 8 may also project partly outwards of opening 3 of tub 2; in which case, the portion of annular collar 8 projecting outwards of opening 3 may be decorated in addition or alternatively to decorative appendixes 9.

Obviously, decorative appendixes 9 need not necessarily be formed in one piece with or even be made of the same material as annular collar 8.

In the Figure 3 variation, decorative appendixes 9 are replaced with supporting appendixes 11 also equally spaced, in the example shown, along the whole of annular collar 8. In this case, decorative border 5 also comprises a number of decorative elements 12, each fitted to a respective supporting appendix 11 projecting from annular collar 8. Like decorative appendixes 9, decorative elements 12 may be in the form of petals, flowers, leaves, biscuits, fruit, dolls, wafers, etc. and may be coloured to represent fruit, flowers, biscuits, wafers, landscapes, dolls, various allegorical figures, and/or writing of any sort.

In this case, too, decorative elements 12 need not necessarily be made of the same material as annular collar 8 and supporting appendixes 11. In fact, annular collar 8 and supporting appendixes 11 may be made of purely structural material, and decorative elements 12 of material that is easily shaped and decorated, e.g. ceramic.

In the Figure 4 variation, the bottom portion of annular collar 8 inserted inside opening 3 of tub 2 is replaced with four fastening rods 13 at respective corners of the rectangle defining the periphery of opening 3. When decorative border 5 is applied to opening 3, the four fastening rods 13 are located at respective corners of opening 3 to hold decorative border 5 firmly in place. In this case, the portion of annular collar 8 projecting outwards of opening 3 is obviously decorative, in addition to or alternatively to decorative appendixes 9.

Operation of container 1 is easily deducible from the above description with no further explanation required.

Container 1 is simply decorated by inserting decorative border 5 inside tub 2. In the example shown, annular collar 8 is inserted inside opening 3 of tub 2 so that decorative appendixes 9 or decorative elements 12 project outwards of tub 2.

In a variation not shown, decorative border 5 is fixed permanently to tub 2; in which case, decorative border 5 may have no annular collar 8, and decorative appendixes 9 or supporting appendixes 11 of decorative border 5 may be pressed simultaneously with tub 2 or spot welded or riveted on to the finished tub 2.

The advantages of container 1 for ice-cream and similar according to the present invention are obvious: decorative border 5, whether removable or integral with tub 2, provides for decorating tub 2 quickly and with obvious economic advantages.

Another advantage of container 1 is that the removable version of decorative border 5 can also be used on other currently marketed ice-cream tubs.

Clearly, changes may be made to container 1 as described and illustrated herein without, however, departing from the scope of the present invention.

## Claims

1. A container (1) for ice-cream and similar, comprising a tub (2) having an opening (3) at the top, and **characterized by** comprising a decorative border (5) extending along the peripheral edge of the opening (3).

2. A container as claimed in Claim 1, **characterized in that** the decorative border (5) comprises a number of decorative elements (8, 9, 12) extending outside the tub (2) and about the peripheral edge of the opening (3) of the tub (2).

3. A container as claimed in Claim 2, **characterized in that** the decorative border (5) comprises a number of supporting appendixes (11) extending outside the tub (2) and about the peripheral edge of the opening (3) of the tub (2); each of said decorative elements (12) being fitted to a respective supporting appendix (11).

4. A container as claimed in Claim 2 or 3, **characterized in that** said decorative elements (9, 12) are in the form of petals, flowers, leaves, biscuits, fruit, dolls, wafers, etc.

5. A container as claimed in any one of the foregoing Claims, **characterized in that** said decorative border (5) is integral with said tub (2).

6. A container as claimed in any one of Claims 1 to 4, **characterized in that** said decorative border (5) is fixed removably to said tub (2).

7. A container as claimed in Claim 6, **characterized in that** said decorative border (5) comprises an annular collar (8) which is inserted in easily removable manner inside the opening (3) of the tub (2); said decorative elements (9, 12) projecting from said annular collar (8) and along the whole of the annular collar (8).

8. A container as claimed in Claim 7, **characterized in that** the portion of said annular collar (8) inserted inside the opening (3) of the tub (2) comprises a number of fastening rods (13) which are inserted inside the opening (3) of the tub (2) to secure said decorative border (5) firmly in place.

9. A decorative border (5) for tubs (2) for ice-cream and similar, **characterized by** comprising an annular collar (8) insertable in easily removable manner inside the opening (3) of said tub (2) for ice-cream and similar; and a number of decorative elements (8, 9, 12) arranged along the whole of said annular collar (8).

10. A decorative border as claimed in Claim 9, **characterized by** comprising a number of supporting appendixes (11) projecting from the annular collar (8) and along the whole of the annular collar (8); each of said decorative elements (12) being fitted to a respective supporting appendix (11).

11. A decorative border as claimed in Claim 10, **characterized in that** said decorative elements (9, 12) are in the form of petals, flowers, leaves, biscuits, fruit, dolls, wafers, etc.

12. A decorative border as claimed in any one of Claims 9 to 11, **characterized in that** the portion of the annular collar (8) inserted inside the opening (3) of said tub (2) comprises a number of fastening rods (13) which are inserted inside the opening (3) of the tub (2) to secure said decorative border (5) firmly in place.
